# EUROPÄISCHE PATENTSCHRIFT

(11) **EP 3 997 178 B1**
(45) Veröffentlichungstag und Bekanntmachung des Hinweises auf die Patenterteilung: **22.05.2024**
(21) Anmeldenummer: 20736714.5
(22) Anmeldetag: 09.07.2020
(51) Int. Cl.: C09C 1/00, C08K 9/02, C09C 1/40, C09D 5/33, C09D 7/62, G01S 13/00, G01S 17/00, G02B 1/10, B32B 33/00, C08J 7/04, G01S 17/931, C08K 3/36, C08K 5/00, C09D 7/40, G02B 5/20, G02B 5/26, H01Q 1/38, H01Q 15/14, C08K 3/22

(54) **VERWENDUNG VON PLÄTTCHENFÖRMIGEN EFFEKTPIGMENTEN ZUR ERHÖHUNG DER INFRAROT-REFLEXION EINES DUNKLEN ODER SCHWARZEN SCHICHTVERBUNDES**
USE OF PLATELET-SHAPED EFFECT PIGMENTS FOR INCREASING THE INFRARED-REFLECTION OF A DARK OR BLACK LAYERED COMPOSITE
UTILISATION DE PIGMENTS À EFFET EN FORME DE PAILLETTES POUR AUGMENTER LA RÉFLEXION L'INFRAROUGE D'UN COMPOSITE DE COUCHES SOMBRE OU NOIR

(30) Priorität: 12.07.2019 EP 19186018
(43) Veröffentlichungstag der Anmeldung: 18.05.2022
(73) Patentinhaber: Merck Patent GmbH, 64293 Darmstadt (DE)
(72) Erfinder: LANDMANN, Christoph, 64291 DARMSTADT (DE); PIRONTI, Gian-Franco, 64291 Darmstadt (DE)
(74) Vertreter: Merck Patent Association
(86) Internationale Anmeldenummer: PCT/EP2020/069318
(87) Internationale Veröffentlichungsnummer: WO 2021/008981

(56) Entgegenhaltungen:
- WO-A1-2018/081613
- WO-A1-2020/083661
- US-B1- 6 366 397

## Beschreibung

Die vorliegende Erfindung bezieht sich auf die Verwendung von plättchenförmigen Effektpigmenten zur Erhöhung der Infrarot-Reflexion eines dunklen oder schwarzen Schichtverbundes, bestehend aus einem Substrat und einer Beschichtung auf dem Substrat, sowie auf einen derartigen dunklen oder schwarzen Schichtverbund, welcher gegenüber herkömmlichen dunklen oder schwarzen Schichtverbunden, die lediglich Kohlenstoff-haltige Schwarzpigmente enthalten, eine erhöhte Infrarot-Reflexion, insbesondere im nahen Infrarot (NIR), aufweist.

Zur optischen Abstands- und Geschwindigkeitsmessung im Straßenverkehr, aber auch für andere Einsatzgebiete, werden seit geraumer Zeit häufig so genannte Lidar-Systeme (Light Detection and Ranging) eingesetzt. Diese ermitteln über die Aussendung von Laserimpulsen und die nachfolgende Detektion des zurückgestreuten Lichtes, beispielsweise anhand der Lichtlaufzeit, die Entfernung von Gegenständen vom Abgabeort der Laserimpulse. Um für ein derartiges System erkennbar zu sein, müssen die zu detektierenden Gegenstände den von der Laserquelle ausgehenden Laserstrahl in einem gewissen Maße reflektieren können, da ansonsten der Gegenstand respektive das Hindernis für das Lidar-System nicht zuverlässig geortet werden kann. Insbesondere für die zunehmende Anzahl von Fahrzeugen, die über ein modernes Fahrassistenz-System verfügen, aber auch für derzeitige und zukünftige autonom gesteuerte Fahrzeuge ist es vonnöten, dass andere Fahrzeuge, Verkehrsleiteinrichtungen oder Hindernisse auf der Fahrbahn schnell, rechtzeitig und zuverlässig erkannt werden sowie deren Geschwindigkeiten analysiert werden können.

Eine große Bedeutung für die Erkennbarkeit von Fahrzeugen für solche lasergestützten Systeme kommt dem für äußere Fahrzeugteile verwendeten Fahrzeuglack zu, welcher im Idealfalle die ausgesendeten Laserimpulse eines Lidar-Systems zu einem hohen Anteil reflektiert, sodass das damit ausgestattete Fahrzeug vom Lidar-System erkannt und in Abstand und Geschwindigkeit beurteilt werden kann. Helle Fahrzeuglacke enthalten in der Regel Bestandteile, insbesondere farbgebende Pigmente, die die entsprechenden Bedingungen bereits erfüllen. Nach wie vor beliebt sind jedoch dunkle oder schwarze Fahrzeuglacke, die zumeist eine beträchtliche Menge an Rußpigmenten enthalten, deren Reflexion im Infrarot-Wellenlängenbereich, insbesondere im hier gebräuchlichen NIR-Wellenlängen-bereich, jedoch sehr gering beziehungsweise nahezu nicht detektierbar ist, sodass die damit ausgerüsteten Fahrzeuge durch die derzeit eingesetzten Lidar-Systeme, die Laserimpulse in einem Wellenlängenbereich um 900 nm und vereinzelt auch bereits in einem Wellenlängenbereich um 1550 nm aussenden, nicht erfasst werden können.

Es liegt auf der Hand, dass die weitere Zunahme an Fahrassistenzsystemen und die zukünftige Weiterentwicklung im Bereich autonomes Fahren es erfordern, dass alle Verkehrshindernisse, gleich welcher Art und Farbgebung, von den entsprechenden Detektionssystemen erfasst und zuverlässig beurteilt werden können. Es besteht daher ein Bedarf an dunklen oder schwarzen Fahrzeuglacken beziehungsweise Beschichtungen auf Gegenständen, die Verkehrshindernisse darstellen können, die Bestandteile enthalten, die bei nahezu unveränderter Farbgestaltung durch Laserstrahlung emittiertes Infrarot-Licht in einem solchen Maße reflektieren, dass das zurückgestreute Licht von den entsprechenden Detektionssystemen erfasst und ausgewertet werden kann.

WO 2018/081613 A1 offenbart ein Schichtsystem zur Verwendung in einem LIDAR-System enthaltend mindestens zwei Schichten, wobei die erste Schicht Pigmente enthält, die für NIR-Strahlung weitgehend transparent sind, und die zweite Schicht NIR-reflektierende Pigmente enthält. US 6,366,397 B1 offenbart einen IR-Reflektor enthaltend eine IR-reflektierende Schicht und eine IR-durchlässige Schicht wobei beide Schichten eine Harzkomponente und eines oder mehrere Pigmente enthalten. WO 2020/083661 A1 offenbart ein Sensor-System enthaltend eine LIDAR-Einheit, eine Kamera und eine Abdeckung welche eine Farbstoffe enthaltende Schicht umfasst. Die vorgenannten Dokumente offenbaren jedoch keinen Schichtverbund gemäß der vorliegenden Erfindung oder legen diesen nahe.

Die Aufgabe der Erfindung besteht daher darin, Inhaltsstoffe für dunkle oder schwarze Schichtverbunde, die beispielsweise von Beschichtungen auf Fahrzeugteilen oder anderen Gegenständen gebildet werden, zur Verfügung zu stellen, die eine Erhöhung der Infrarot-Reflexion gegenüber herkömmlichen dunklen oder schwarzen Schichtverbunden dieser Art, insbesondere im NIR-Wellenlängenbereich, ermöglichen.

Eine weitere Aufgabe der Erfindung besteht darin, dunkle oder schwarze Schichtverbunde, die aus Beschichtungen auf Fahrzeugteilen oder anderen Gegenständen bestehen, zur Verfügung zu stellen, die gegenüber gleichfarbigen handelsüblichen Vergleichs-Schichtverbunden über eine erhöhte Infrarot-Reflexion, insbesondere im NIR-Wellenlängenbereich, verfügen, sodass sie von den entsprechenden Detektionssystemen, vorzugsweise von Lidar-Systemen, erfasst und bewertet werden können.

Die Aufgabe der Erfindung wird gelöst durch die Verwendung von plättchenförmigen Effektpigmenten zur Erhöhung der Infrarot-Reflexion eines dunklen oder schwarzen Schichtverbundes, bestehend aus einem Substrat und einer Beschichtung auf dem Substrat, wobei die Beschichtung zusätzlich oder alternativ zu einem Kohlenstoff-haltigen Schwarzpigment mindestens ein plättchenförmiges Effektpigment enthält, welches auf einem plättchenförmigen Al₂O₃- oder SiO₂-Träger mindestens eine Fe₃O₄-haltige Schicht oder eine FeTiOs-haltige Schicht aufweist, wobei der Schichtverbund einen L*15 -Wert im Bereich von 1 bis 60 aufweist, und wobei die Infrarot-Reflexion des Schichtverbundes mindestens im Wellenlängen-Bereich von 850 nm bis 1570 nm erhöht ist, verglichen mit einem dunklen oder schwarzen Schichtverbund aus einem Substrat und einer Beschichtung, wobei der Schichtverbund das Kohlenstoff- haltige Schwarzpigment enthält, einen L*15 -Wert im genannten Bereich aufweist und das mindestens eine plättchenförmige Effektpigment nicht enthält.

Darüber hinaus wird die Aufgabe der Erfindung auch durch einen dunklen oder schwarzen Schichtverbund mit erhöhter Infrarot-Reflexion, bestehend aus einem Substrat und einer Beschichtung, gelöst, wobei die Beschichtung zusätzlich oder alternativ zu einem Kohlenstoff-haltigen Schwarzpigment mindestens ein plättchenförmiges Effektpigment enthält, welches auf einem plättchenförmigen Al₂O₃- oder SiO₂-Träger mindestens eine Fe₃O₄-haltige Schicht oder eine FeTiOs-haltige Schicht aufweist, wobei der dunkle oder schwarze Schichtverbund einen L*15 -Wert im Bereich von 1 bis 60 aufweist und wobei die Infrarot-Reflexion der Beschichtung mindestens im Wellenlängenbereich 850 bis 1570 nm höher ist als die Infrarot-Reflexion eines Vergleichs-Schichtverbundes, der das Kohlenstoff-haltige Schwarzpigment enthält, einen L*15 -Wert im genannten Bereich aufweist und das mindestens eine plättchenförmige Effektpigment nicht enthält.

Gegenstand der Erfindung ist daher die Verwendung spezieller plättchenförmiger Effektpigmente zur Erhöhung der Infrarot-Reflexion von dunklen oder schwarzen Schichtverbunden, die aus einem Substrat und einer sich auf dem Substrat befindenden Beschichtung bestehen.

Infrarotlicht wird den Wellenlängen des Lichtes ab 780 nm zugeordnet. Der sich direkt an den Bereich des sichtbaren Lichtes (bis ca. 780 nm) anschließende Wellenlängenbereich wird als nahes Infrarot (NIR) bezeichnet und umfasst die Teilbereiche IR-A (780 bis 1400 nm) und IR-B (1400 bis 3000 nm). Bisherige Lidar-System arbeiten in der Regel mit Laserimpulsen im Bereich von 900 ± 50 nm, allerdings sind vereinzelt auch bereits Lidar-systeme bekannt, die mit längeren Wellenlängen von 1550 ± 20 nm arbeiten. Es ist daher wünschenswert, Materialien zur Verfügung zu haben, die die Infrarot-Reflexion von dunklen oder schwarzen Schichtverbunden, die aus einem Substrat und einer darauf angeordneten Beschichtung bestehen, wahlweise im Bereich um 900 nm und/oder im Bereich um 1550 nm erhöhen können.

Die nunmehrigen Erfinder haben überraschenderweise gefunden, dass bestimmte plättchenförmige Effektpigmente diese Anforderungen erfüllen können, wenn sie gezielt in Beschichtungen auf Substraten eingesetzt und je nach Erfordernis in ihrer Zusammensetzung variiert werden.

Grundsätzlich sollen plättchenförmige Effektpigmente, die in Beschichtungen von dunklen oder schwarzen Schichtverbunden eingesetzt werden, weitestgehend ebenfalls über eine dunkle bzw. schwarze Körperfarbe verfügen, die durch eventuelle Interferenzfarben ergänzt, aber nicht vermindert wird. Die in den Beschichtungen der vorliegenden dunklen oder schwarzen Schichtverbunde einzusetzenden plättchenförmigen Effektpigmente weisen demzufolge auf einem plättchenförmigen Trägerpartikel jeweils mindestens eine Fe₃O₄-haltige Schicht oder eine FeTiOs-haltige Schicht auf, die den Effektpigmenten eine dunkelgraue bzw. schwarze Absorptionsfarbe (Körperfarbe) verleihen. Gegebenenfalls vorhandene zusätzliche Schichten auf dem Trägerpartikel, die in der Regel aus Metalloxiden und/oder Metalloxidhydraten bestehen, sollen die Körperfarbe nicht aufhellen.

Es hat sich nunmehr herausgestellt, dass den plättchenförmigen Trägerpartikeln der Effektpigmente jedoch eine besondere Bedeutung für die zielgerichtete Gestaltung der Infrarot-Reflexion der die plättchenförmigen Effektpigmente enthaltenden Beschichtung eines dunklen oder schwarzen Schichtverbundes, und damit der Infrarot-Reflexion des gesamten Schichtverbundes, zukommt. Diese Trägerpartikel müssen aus Materialien bestehen, die eine über die gesamte Ausdehnung des Trägerpartikels einheitliche Schichtdicke ermöglichen, wobei sich diese Schichtdicke darüber hinaus während des Herstellprozesses der Trägerpartikel noch gezielt einstellen lassen und über die Charge keine große Schwankungsbreite aufweisen soll. Darüber hinaus hat sich herausgestellt, dass nur bestimmte Materialien geeignet sind, als Trägerpartikel für die speziellen Effektpigmente zu dienen und dabei einen eigenen Beitrag zur Erhöhung der Infrarot-Reflexion, insbesondere im angestrebten NIR-Wellenlängenbereich, zu leisten.

Als geeignete Trägermaterialien für die einzusetzenden plättchenförmigen Effektpigmente im Sinne der Erfindung haben sich Aluminiumoxid (Al₂O₃) und Siliziumdioxid (SiO₂) erwiesen, die in den plättchenförmigen Trägerpartikeln mit einem Anteil von mindestens 80 Gew.%, bezogen auf das Gewicht der Trägerpartikel, enthalten sind. Vorzugsweise beträgt der Anteil an Siliziumdioxid oder Aluminiumoxid mindestens 90 Gew.%, besonders bevorzugt mindestens 95 Gew.%, bezogen auf das Gewicht der Trägerpartikel.

Im Falle von Al₂O₃-Trägerpartikeln können diese von 0,1 bis zu 10 Gew.%, vorzugsweise von 0,1 bis zu 5 Gew.%, bezogen auf das Gewicht der Trägerpartikel, an Fremdbestandteilen enthalten. Dabei handelt es sich um die Oxide oder Oxidhydrate von Ti, Sn, Si, Ce, Ca, Zn, In und/oder Mg. Bevorzugt werden Al₂O₃-Trägerpartikel eingesetzt, die neben Al₂O₃ noch von 0,1 bis 5 Gew.%, bezogen auf das Gewicht der Trägerpartikel, an TiO₂ enthalten. Bezogen auf SiO₂-Trägerpartikel bestehen diese zu mindestens 80 Gew.% aus SiO₂ und können von 0 bis 20 Gew.% Siliziumoxidhydrat sowie ggf. Spuren von Fremdionen enthalten, sodass die Summe dieser Bestandteile 100 Gew.% ergibt.

Alle genannten Träger werden nachfolgend, obwohl sie einen gewissen Gewichtsanteil an anderen Materialien enthalten können, als Al₂O₃-Träger oder SiO₂-Träger bezeichnet. Über die Dicke der plättchenförmigen Trägerpartikel lässt sich das Maximum der Infrarot-Reflexion im Wellenlängenbereich 850 nm bis 1570 nm für den dunklen oder schwarzen Schichtverbund, der in einer Beschichtung die plättchenförmigen Effektpigmente enthält, gezielt einstellen.

Plättchenförmige Al₂O₃-Träger sind mit einer mittleren geometrischen Dicke im Bereich von 120 bis 400 nm für den Einsatz als Trägerpartikel für die erfindungsgemäß verwendeten plättchenförmigen Effektpigmente geeignet. Während bei mittleren geometrischen Dicken der Trägerpartikel im Bereich von 120 bis 150 nm mit den resultierenden plättchenförmigen Effektpigmenten eine Erhöhung der Infrarotreflexion in den Wellenlängenbereichen 900 ± 50 nm und 1550 ± 20 nm erzielt werden kann, wobei der Fokus auf dem Wellenlängenbereich 900 ± 50 nm liegt, liefern mittlere geometrische Dicken der Trägerpartikel im Bereich von 200 bis 350 nm eine hohe Infrarotreflexion im Wellenlängenbereich von 1550 ± 20 nm, wogegen sich bei mittleren geometrischen Dicken im Bereich von 350 bis 400 nm das Maximum der Infrarotreflexion in den Wellenlängenbereich 900 ± 50 nm verschiebt. Da, wie bereits vorab erwähnt, die Schwankungsbreite der geometrischen Dicke der einzelnen Al₂O₃-Trägerpartikel in der einzusetzenden Masse an Trägerpartikeln sich lediglich in einem engen Rahmen bewegen soll, werden als Al₂O₃-Träger vorzugsweise monokristalline Trägerpartikel eingesetzt, bei deren Herstellung sowohl die Schichtdickenvarianz der Partikel als auch die Varianz der Partikelgröße über den Herstellungsprozess präzise gesteuert werden können. In diesem Sinne sind Al₂O₃-Trägerpartikel, die gemäß dem in EP 763 573 A2 beschriebenen Verfahren hergestellt werden, für den Einsatz in der vorliegenden Erfindung besonders geeignet.

Plättchenförmige, SiO₂-Träger sind mit einer mittleren geometrischen Dicke im Bereich von 150 bis 500 nm für den Einsatz als Trägerpartikel für die erfindungsgemäß verwendeten plättchenförmigen Effektpigmente geeignet. Auch hier soll die Schwankungsbreite der geometrische Dicken der einzelnen Trägerpartikel in der einzusetzenden Masse an Trägerpartikeln gering und die geometrische Schichtdicke der Trägerpartikel über das Herstellungsverfahren präzise steuerbar sein. Aus diesem Grunde ist für die Herstellung der SiO₂-Trägerpartikel das später beschriebene Bandverfahren gemäß WO 93/08237 A1 besonders geeignet und daher bevorzugt.

Tendenziell ändern sich die Maxima der Infrarotreflexion abhängig von der mittleren geometrischen Dicke der Trägerpartikel bei SiO₂-Trägern ähnlich wie bei den Al₂O₃-Trägern, aber die Bereiche sind etwas verschoben mit 150 bis 200 nm für erhöhte Reflexionswerte in den Wellenlängenbereichen 900 ± 50 nm und 1550 ± 20 nm mit Fokus auf dem Wellenlängenbereich 900 ± 50 nm, einer mittleren geometrischen Dicke von 250 bis 400 nm für hohe Reflexionswerte im Wellenlängenbereich 1550 ± 20 nm, und einer mittleren geometrischen Dicke von 450 bis 500 nm für das Maximum der Infrarotreflexion im Wellenlängenbereich 900 ± 50 nm.

Neben der mindestens einen Fe₃O₄-haltigen Schicht oder FeTiOs-haltigen Schicht können die erfindungsgemäß einzusetzenden plättchenförmigen Effektpigmente noch andere Schichten auf dem Trägerpartikel aufweisen. Diese bestehen vorzugsweise aus Metalloxiden, Metalloxidhydraten oder Metallmischoxiden und sind ausgewählt aus Siliziumdioxid, Siliziumdioxidhydrat, Titandioxid, Titandioxidhydrat, Zinndioxid, Zinndioxidhydrat, Eisen(III)oxid, Goethit (FeOOH) und/oder Mischoxiden aus Titandioxid mit Zinndioxid beziehungsweise aus Titandioxid mit Eisen(III)oxid.

Diese Schichten können sich sowohl zwischen dem Trägerpartikel und der Fe₃O₄-haltigen Schicht oder FeTiOs-haltigen Schicht als auch alternativ oberhalb dieser Schicht auf dem Trägerpartikel befinden, oder aber voneinander verschiedene Schichten der genannten Art befinden sich zwischen dem Trägerpartikel und der jeweiligen Fe₃O₄-haltigen Schicht oder FeTiOs-haltigen Schicht und zusätzlich auch oberhalb dieser Schicht.

Darüber hinaus können die einzusetzenden plättchenförmigen Effektpigmente als finale Schicht auf ihrer jeweiligen Oberfläche auch so genannte Nachbeschichtungen aufweisen, die anorganischer und/oder organischer Natur sein können. Solche Nachbeschichtungen sind auf dem Gebiet der Effektpigmente hinlänglich bekannt. Sie werden auf der Oberfläche der Effektpigmente aufgebracht, um deren chemische oder mechanische Stabilität zu verbessern, um deren Einarbeitung in verschiedene Anwendungsmedien zu erleichtern, um ein gewünschtes Aufschwimmverhalten zu erreichen oder aus verschiedenen anderen Gründen der besseren Handhabbarkeit und Haltbarkeit. Diese Nachbeschichtungen basieren häufig auf anorganischen Metalloxiden oder Metalloxidhydraten oder auf geeigneten organischen Substanzen und werden in Schichtdicken von nur wenigen Nanometern (häufig 1 bis 20 nm) auf der Oberfläche der Effektpigmente aufgebracht. Sie beeinflussen in der Regel die Farb-, Glanz- und Floppeigenschaften der Effektpigmente nicht oder nur in einem geringen Maße und sind daher für die funktionellen und koloristischen Eigenschaften der Effektpigmente von geringer Bedeutung.

Plättchenförmige Effektpigmente, die für die erfindungsgemäße Verwendung geeignet sind, sind in den Patentschriften DE102014003975 A1, WO 2012/076110 A1 sowie in der vorab eingereichten Patentanmeldung der jetzigen Patentanmelderin EP 19163126.6 genauer beschrieben, insbesondere im Hinblick auf plättchenförmige Effektpigmente, die auf Al₂O₃-Trägern aufgebaut sind. Die angegebenen Patentschriften offenbaren sowohl die geeigneten Schichtfolgen und Schichtdicken auf den Trägerpartikeln als auch die jeweiligen bevorzugten Bereiche der Partikelgrößen sowie die entsprechenden Herstellungsverfahren. Aus diesem Grunde wird hier von einer detaillierten Beschreibung abgesehen und insofern ausdrücklich auf die genannten Patentdokumente verwiesen, deren diesbezüglicher Inhalt hier vollumfänglich mit eingeschlossen sein soll.

Darüber hinaus sind geeignete plättchenförmige Effektpigmente als Handelsprodukte der Firma Merck KGaA beispielsweise unter den Bezeichnungen Xirallic^{®} NXT M260-60 WNT Panthera Silver und Xirallic^{®} NXT M260-70 SW Amur Black kommerziell verfügbar.

Solche plättchenförmigen Effektpigmente, die auf Al₂O₃-Trägerpartikeln aufgebaut sind, werden für die Verwendung gemäß der vorliegenden Erfindung bevorzugt eingesetzt.

In Bezug auf plättchenförmige Effektpigmente, die auf SiO₂-Trägerpartikeln aufgebaut sind, werden die Trägerplättchen vorzugsweise mittels eines Bandverfahrens hergestellt, welches in WO 93/08237 A1 näher beschrieben ist. Dabei werden die Trägerplättchen aus einem anorganischen SiO₂-Precursormaterial (z.B. Natriumwasserglaslösung) hergestellt, wobei der Precursor auf das Band aufgebracht, mit Säure in die oxidische Form bzw. in das Oxidhydrat überführt, verfestigt und anschließend vom Band abgelöst wird. Die geometrische Schichtdicke der Plättchen wird über die Auftragsmenge bzw. Nassschichtdicke der Precursorschicht eingestellt, was sehr präzise möglich ist. Anschließend werden die SiO₂-Plättchen in der gleichen Art und Weise mit den nachfolgenden Schichten inklusive der Fe₃O₄-haltigen Schicht oder der FeTiOs-haltigen Schicht beschichtet, wie es in den oben genannten Patentanmeldungen der jetzigen Patentanmelderin für auf Al₂O₃-Plättchen basierende Effektpigmente beschrieben ist.

Die entsprechend der Erfindung einzusetzenden plättchenförmigen Effektpigmente weisen im allgemeinen Partikelgrößen im Bereich von 1 bis 200 µm auf, wobei Partikelgrößen zwischen 5 und 150 µm, vorzugsweise 7 bis 100 µm, und insbesondere zwischen 7 und 50 µm, besonders bevorzugt sind. Dabei sind mittlere Partikelgrößen (d₅₀) im Bereich von 12 bis 25 µm bevorzugt. Als Partikelgröße wird die Länge der längsten Achse des Pigmentpartikels angesehen.

Die Partikelgröße der plättchenförmigen Effektpigmente wird vorzugsweise über eine Laserdiffraktionsmethode bestimmt, die allgemein geläufig ist und den Vorteil hat, auch die Partikelgrößenverteilung der Effektpigmente bestimmen zu können. Für die erfindungsgemäß eingesetzten Effektpigmente sind die Partikelgrößen mit einem Malvern Mastersizer 3000, APA 300 (Produkt der Firma Malvern Instruments, Ltd., UK) bestimmt worden.

Die erfindungsgemäß einzusetzenden plättchenförmigen Effektpigmente weisen im allgemeinen einen Formfaktor (Verhältnis der mittleren Partikelgröße zur mittleren Dicke der Partikel) im Bereich von 5 bis 200 auf.

Je nach eingestellter geometrischer Dicke der entsprechenden Trägerpartikel können sich sowohl die Partikelgröße als auch der Formfaktor der speziellen Effektpigmente jedoch in einem engeren Rahmen innerhalb der hier beschriebenen Bereiche bewegen, wie es beispielsweise in den oben genannten Patentanmeldungen der jetzigen Patentanmelderin konkret beschrieben ist. Auf entsprechende Details in den genannten Patentanmeldungen wird hier nochmals ausdrücklich Bezug genommen.

So sind beispielsweise in der WO 2012/076110 A1 schwarze plättchenförmige Effektpigmente beschrieben, die auf einem plättchenförmigen Aluminiumoxidträgerpartikel basieren, der ein Aspektverhältnis von mindestens 85 aufweist und mit Metalloxiden beschichtet ist, wobei eine Schicht der Beschichtung aus Fe₃O₄ besteht. Die geometrische Dicke der Fe₃O₄-Schicht liegt im Bereich von 50 bis 250 nm. Die Trägerpartikel dieser Effektpigmente weisen eine mittlere geometrische Dicke im Bereich von 50 bis 200 nm und einen mittlere Partikelgröße von kleiner als 20 µm auf. Diese plättchenförmigen Effektpigmente sind gemäß der vorliegenden Erfindung speziell für die Erhöhung der Infrarot-Reflexion eines dunklen oder schwarzen Schichtverbundes, bestehend aus einem Substrat und einer Beschichtung auf dem Substrat, im Wellenlängenbereich 900 ± 50 nm geeignet, wenn sie in der Beschichtung eingesetzt werden.

In der noch nicht veröffentlichten Patentanmeldung der Patentanmelderin mit dem Aktenzeichen EP 19163126.6 sind blauschwarze plättchenförmige Effektpigmente unter anderem auf der Basis von plättchenförmigen Aluminiumoxidträgerpartikeln beschrieben, bei denen die unbeschichteten Trägerpartikel eine intrinsische grüne Interferenzfarbe aufweisen. Diese Trägerpartikel sind ebenfalls mit Metalloxiden beschichtet, wobei die Beschichtung eine Magnetitschicht aufweist. Diese Magnetitschicht weist eine geometrische Dicke im Bereich von 80 bis 230 nm auf. Bevorzugt geeignet für den Einsatz in der vorliegenden Erfindung sind solche blauschwarzen plättchenförmigen Effektpigmente, deren Al₂O₃-Trägerpartikel eine mittlere geometrische Dicke im Bereich von 180 bis 260 nm aufweisen und die Partikelgrößen im Bereich von 5 bis 200 µm aufweisen. Diese Effektpigmente eignen sich besonders zur Erhöhung der Infrarot-Reflexion eines dunklen oder schwarzen Schichtverbundes im Wellenlängenbereich 1550 ± 20 nm, wenn sie in der Beschichtung auf dem Substrat eingesetzt werden.

Unter geometrischer Dicke der Trägerpartikel bzw. einer Schicht auf dem Trägerpartikel wird die direkt messbare Dicke der Trägerpartikel bzw. der Schicht anhand von elektronenmikroskopischen SEM-Aufnahmen des Querschnitts der Trägerpartikel bzw. der plättchenförmigen Effektpigmente verstanden. Die geometrische Dicke der Trägerpartikel bzw. die geometrische Schichtdicke einer Schicht auf dem Trägerpartikel wird in der Regel in nm angegeben. Der Mittelwert wird durch das Ausmessen von mindestens 1000 Partikeln ermittelt.

Die geometrische Dicke der gemäß der vorliegenden Erfindung eingesetzten Trägerpartikel bzw. die geometrische Schichtdicke von Schichten auf dem Trägerpartikel der plättchenförmigen Effektpigmente wird nach dieser Methode ermittelt.

Unter einem dunklen oder schwarzen Schichtverbund, wird erfindungsgemäß ein Schichtverbund, bestehend aus einem Substrat und einer sich auf dem Substrat befindlichen Beschichtung verstanden, welcher farbgebende Komponenten optional im Substrat selbst und darüber hinaus entweder in einer einzigen Schicht der Beschichtung auf dem Substrat oder in einem System aus zwei übereinander aufgebrachten Schichten der Beschichtung auf dem Substrat enthält und im CIELAB-L*a* b*-Farbraumsystem einen L*15-Wert im Bereich von 1 bis 60, vorzugsweise im Bereich von 5 bis 50, aufweist, gemessen von der Beschichtungsseite aus. Dabei bezieht sich der L* 15-Wert auf den Helligkeitswert unter einem Beobachtungswinkel, der eine Entfernung in Richtung der Lichtquelle von 15 Grad vom Glanzwinkel einer mit einem Gonio-Spektralphotometer unter einem Beleuchtungswinkel von 45° vermessenen Probe aufweist. Als für die Definition maßgebende farbgebende Komponenten werden erfindungsgemäß das Kohlenstoff-haltige Schwarzpigment und das plättchenförmige Effektpigment angesehen. Weitere farbgebende Komponenten können optional in Form von anorganischen und/oder organischen Absorptionspigmenten, Farbstoffen beziehungsweise in Form weiterer Effektpigmente in der Beschichtung vorhanden sein, solange die Anforderungen an den L* 15-Wert des Schichtverbundes erfüllt sind. Der L* 15-Wert im CIELAB-System stellt einen Wert für die Helligkeit der Probe nahe am Glanzwinkel dar und weist damit generell den höchsten Helligkeitswert auf, den diese Probe, abhängig vom Beobachtungswinkel, aufweisen kann. Je höher der Wert ist, umso heller ist der koloristische Eindruck der Probe. Umgekehrt zeigt eine Probe mit einem niedrigen L* 15-Wert einen dunklen oder schwarzen Farbeindruck. Im beanspruchten Bereich ist der visuelle Farbeindruck der Proben dunkel beziehungsweise schwarz.

(Für die vorliegende Erfindung wird eine Probe wie folgt hergestellt: Schwarz und weiß beschichtete Testbleche der Firma Leneta (Leneta T12G Metopac, Kohlenstoff-haltiges Schwarzpigment in der schwarzen Beschichtung enthalten) werden jeweils mit einer Beschichtungszusammensetzung vollflächig beschichtet, die neben einem handelsüblichen Bindemittel und einem Lösemittel (Varnish WBC000 der Firma MIPA SE, Deutschland) eine Pigmentmassekonzentration PMK von 18% in der Trockenmasse an plättchenförmigen Effektpigmenten gemäß der Erfindung enthält. Die Beschichtung erfolgt mittels eines pneumatischen Sprühverfahrens mit einer Trockenschichtdicke im Bereich von 12 bis 15 µm. Nach der thermischen Aushärtung dieser Farbschicht wird ein farbloser Klarlack (MIPA CC4, Firma MIPA SE) auf die Farbschicht aufgebracht (Trockenschichtdicke ca. 50 µm). Die so erhaltenen Proben werden mit einem Gonio-Spektralphotometer vom Typ BYK-mac i (Firma BYK Gardner GmbH, DE) über dem schwarz vorbeschichteten Flächenteil des Testblechs im SMC 5-Modus vermessen. Zu Vergleichszwecken werden Proben nach dem gleichen Verfahren, aber mit anderer Pigmentmassekonzentration, hergestellt).

Als Substrate werden erfindungsgemäß Folien, Platten oder Formteile aus Kunststoff, Metall oder aus Kompositwerkstoffen eingesetzt, wobei das jeweilige Substrat optional vorbehandelt und/oder vorbeschichtet sein kann, beispielsweise mittels elektrostatischer Vorbehandlung und/oder einer oder mehreren Primerschichten. Oft enthalten die erfindungsgemäß eingesetzten Substrate weder im Substratmaterial selbst noch in der ggf. vorhandenen Vorbeschichtung ein Kohlenstoff-haltiges Schwarzpigment. Gemäß der vorliegenden Erfindung kann jedoch ein Kohlenstoff-haltiges Schwarzpigment sowohl im Substratmaterial (beispielsweise bei schwarz massegefärbten Kunststofffolien, -platten oder -formteilen) und/oder in einer Primerschicht enthalten sein.

Die Beschichtung des dunklen oder schwarzen Schichtverbundes, bei der es sich um eine trockene, feste Beschichtung handelt, enthält neben dem optional enthaltenen Kohlenstoff-haltigen Schwarzpigment und dem mindestens einen plättchenförmigen Effektpigment der genannten Art noch mindestens ein Bindemittel. Je nach Einsatzzweck des Schichtverbundes können wässrige, lösemittelhaltige oder strahlenhärtende Bindemittelsysteme aller bekannten Arten verwendet werden. Einschränkend wirkt hier nur, dass das Bindemittelsystem für den jeweiligen Anwendungszweck des Schichtverbundes sowie das angewendete Auftragsverfahren der Beschichtung auf das Substrat geeignet sein muss. Da die angestrebte Wirkung des erfindungsgemäßen Schichtverbundes unabhängig vom verwendeten Bindemittelsystem erreicht wird, wird auf eine weitere Beschreibung der möglichen Bindemittelsysteme verzichtet.

Neben mindestens einem Bindemittel kann die Beschichtung des erfindungsgemäßen Schichtverbundes auch die üblichen Zusatzstoffe, Hilfsstoffe, Füllstoffe und gegebenenfalls Farbmittel enthalten, die üblicherweise in verschiedenen Beschichtungszusammensetzungen verwendet werden. Hier ist lediglich darauf zu achten, dass der Farbeindruck eines dunklen oder schwarzen Schichtverbundes, der maßgeblich bestimmt wird durch die sich auf dem Substrat befindliche Beschichtung, und der über den jeweiligen L* 15 -Wert definiert ist, erhalten bleiben muss, sodass alle zusätzlich eingesetzten Stoffe, die die Farbgebung der Beschichtung beeinflussen können, sich dem Erfordernis der Einhaltung des L* 15-Wertes unterordnen müssen. Ansonsten können die zusätzlich eingebrachten Stoffe den erforderlichen optischen, mechanischen oder funktionellen Eigenschaften der jeweils resultierenden Beschichtung angepasst werden.

Die entsprechende Beschichtung kann auf dem Substrat mittels jedem üblichen Beschichtungsverfahren aufgebracht sein. Hier sind beispielhaft elektrostatische oder pneumatische Sprühverfahren, Coil-coating-Verfahren, Dip-Coating-Verfahren, Schleuderbeschichtung, Pulverlackierungsverfahren und auch diverse Druckverfahren (Sieb-, Tampon-, Inkjetdruck) zu nennen. Das für den jeweiligen Fall passende Beschichtungsverfahren wird je nach gewünschtem Einsatzzweck des dunklen oder schwarzen Schichtverbundes ausgewählt und spielt für die angestrebte Wirkung der Beschichtung keine wesentliche Rolle. Es versteht sich von selbst, dass die für das jeweilige Auftragsverfahren verwendete Beschichtungszusammensetzung neben den oben genannten Bestandteilen auch ggf. Lösemittel oder Lösemittelgemische enthalten kann, die in der verfestigten, getrockneten oder gehärteten Beschichtung aber nicht mehr vorhanden sind.

Des Weiteren kann die Beschichtung je nach Erfordernis auf dem Substrat auch mittels eines Injection Molding -Verfahrens beziehungsweise eines Reversed Injection Molding-Verfahrens aufgebracht werden. In diesem Falle werden die zusätzlich zu dem optional eingesetzten Kohlenstoff-haltigen Schwarzpigment und dem mindestens einen plättchenförmigen Effektpigment nötigen Inhaltsstoffe der jeweiligen Beschichtungszusammensetzung an das konkrete Verfahren angepasst und gemäß dem Wissen des Fachmanns routinemäßig ausgewählt.

Die Beschichtung auf dem Substrat, die zusammen den erfindungsgemäßen Schichtverbund bilden, weist eine Gesamtdicke von mindestens 30 µm, vorzugsweise im Bereich von 50 bis 230 µm, auf. Sie kann ein- oder mehrschichtig aufgebaut sein und ist bevorzugt mehrschichtig aufgebaut. Mindestens die Schicht der Beschichtung, welche die plättchenförmigen Effektpigmente enthält, weist dabei eine Dicke im Bereich von 1 bis 60 µm, vorzugsweise von 3 bis 30 µm, und insbesondere von 10 bis 20 µm, auf. Enthält eine der Schichten eines Mehrschichtsystems lediglich das Kohlenstoff-haltige Schwarzpigment, aber nicht das mindestens eine plättchenförmige Effektpigment, weist diese Schicht üblicherweise eine Dicke von 3 bis 20 µm, vorzugsweise von 7 bis 12 µm, auf.

Unpigmentierte Klarlackschichten, die häufig die äußerste Schicht eines Mehrschichtsystems bilden, weisen eine Schichtdicke von mindestens 35 µm auf, die auf einen Bereich von bis zu 150 µm erweitert werden kann.

Alle Schichtdickenangaben beziehen sich selbstverständlich auf die jeweiligen Trockenschichtdicken.

Durch die Verwendung von plättchenförmigen Effektpigmenten, die auf einem plättchenförmigen Trägerpartikel jeweils mindestens eine Fe₃O₄-haltige Schicht oder eine FeTiOs-haltige Schicht aufweisen, wobei der Trägerpartikel jeweils ein plättchenförmiger Al₂O₃- oder SiO₂-Träger ist, erhöht sich die Infrarot-Reflexion des entsprechenden dunklen oder schwarzen Schichtverbundes mindestens im Wellenlängenbereich von 850 bis 1550 nm, verglichen mit einem dunklen oder schwarzen Schichtverbund, der ebenfalls aus einem Substrat und einer Beschichtung besteht und ein Kohlenstoff-haltiges Schwarzpigment enthält, aber die genannten plättchenförmigen Effektpigmente nicht enthält.

Das Ausmaß der Erhöhung der Infrarot-Reflexion im genannten Wellenlängenbereich ist dabei von der konkreten Art der plättchenförmigen Effektpigmente, vom Mischungsverhältnis der plättchenförmigen Effektpigmente, wenn diese in Gemischen eingesetzt werden, oder auch davon abhängig, ob in der jeweiligen Beschichtungszusammensetzung zusätzlich zu den plättchenförmigen Effektpigmenten ein Kohlenstoff-haltiges Schwarzpigment enthalten ist. Erhöhungen der Infrarot-Reflexion im genannten Wellenlängen-Zielbereich um mindestens 10% können erwartet werden.

Die NIR-Reflexion der Beschichtungsseite des erfindungsgemäßen dunklen oder schwarzen Schichtverbundes, bestehend aus einer Beschichtung auf einem Substrat, wird winkelunabhängig mittels einer Ulbricht-Kugel und einem UV/VIS/NIR Spekrophotometer vom Typ Lambda 900 der Firma PerkinElmer, Inc. bestimmt und mit integrierter Software ausgewertet.

Als Kohlenstoff-haltiges Schwarzpigment werden in technischen Beschichtungen häufig Farbruße verschiedener Korngrößen eingesetzt. Farbruße gelten auch als bevorzugte Kohlenstoff-haltige Schwarzpigmente im Hinblick auf die vorliegende Erfindung. Beispielhaft seien hier die für Versuche und Vergleichsversuche verwendeten handelsüblichen Farbrußtypen mit den Handelsnamen Emperor^{®} 2000 (Worlée-GmbH), Spezial Black^{®} 6 und Spezial Black^{®} 100 (Orion Engineered Carbons) genannt.

Als besonders positiv für die vorliegende Erfindung hat sich jedoch auch der Einsatz von Perylen Black (Pigment Black 32) als Kohlenstoff-haltiges Schwarzpigment herausgestellt, da dieses Pigment selbst in Beschichtungen eine hohe Reflexion im NIR-Bereich zeigt und damit den Effekt der Erhöhung der Infrarot-Reflexion, insbesondere im NIR-Wellenlängenbereich, der durch die speziellen plättchenförmigen Effektpigmente, die erfindungsgemäß zum Einsatz kommen, erzielt wird, noch verstärkt.

Die dunklen oder schwarzen Beschichtungen auf Substraten, die für den erfindungsgemäßen Schichtverbund zum Einsatz kommen, können einschichtig oder mehrschichtig aufgebaut sein. Vorzugsweise sind sie Teil eines Mehrschichtsystems auf dem Substrat, welches neben der ein- oder zweischichtigen dunklen oder schwarzen Beschichtung beispielsweise auch eine finale Klarlackschicht und/oder weitere Zwischenschichten auf dem Substrat aufweisen kann.

Daraus ergeben sich für den erfindungsgemäßen Schichtverbund mehrere grundlegende Ausführungsformen. Alle Angaben zu Schichtdicken und Schichtgewichten beziehen sich auf die Trockenschichtdicken beziehungsweise das Gewicht der jeweiligen trockenen Schicht.

In einer ersten Ausführungsform enthält der dunkle oder schwarze Schichtverbund kein Kohlenstoff-haltiges Schwarzpigment. Weder das Substrat einschließlich eventuell vorhandener Vorbeschichtungen noch die Beschichtung enthält ein Kohlenstoff-haltiges Schwarzpigment, sondern die Beschichtung enthält lediglich das mindestens eine plättchenförmige Effektpigment der genannten Art. In dieser Ausführungsform ist eine hohe Pigmentmassekonzentration des entsprechenden plättchenförmigen Effektpigmentes in der Beschichtung vonnöten, um einen dunklen oder schwarzen Farbeindruck des Schichtverbundes zu erzielen. Die Pigmentmassekonzentration des plättchenförmigen Effektpigmentes sollte daher mindestens 15 Gew.% betragen, bezogen auf das Gewicht derjenigen Schicht der Beschichtung, die das plättchenförmige Effektpigment enthält. Die Beschichtung kann dabei optional ein Mehrschichtsystem darstellen.

In einer zweiten Ausführungsform ist ein Kohlenstoff-haltiges Schwarzpigment im Substrat, nicht jedoch in der Beschichtung des Schichtverbundes enthalten. Dabei schließt der Begriff "Substrat" sowohl den Korpus des Substrates (beispielsweise in Form von masseeingefärbten Kunststofffolien oder -formkörpern) als auch ggf. vorhandene Vorbeschichtungen (Primerschichten) ein. Die Beschichtung auf dem Substrat enthält dagegen lediglich mindestens ein plättchenförmiges Effektpigment der beschriebenen Art (selbstverständlich eine Sorte, nicht einen einzelnen Pigmentpartikel). Die Beschichtung kann dabei optional ein Mehrschichtsystem darstellen.

In einer dritten Ausführungsform sind ein Kohlenstoff-haltiges Schwarzpigment und das mindestens eine plättchenförmige Effektpigment gemeinsam in einer Schicht der Beschichtung enthalten. Dabei ist es möglich, aber nicht erforderlich, dass das Substrat, auf dem die erfindungsgemäße Beschichtung aufgebracht wird, selbst ein Kohlenstoff-haltiges Schwarzpigment enthält oder mit einer ein solches Schwarzpigment enthaltenden Schicht vorbeschichtet ist. Optional können weitere Schichten und vorteilhafterweise eine finale Klarlackschicht Teil der Beschichtung sein, solange der L* 15-Wert des Schichtverbundes im Bereich von 1 bis 60 liegt und der Schichtverbund als Ganzes daher dem Erfordernis eines dunklen oder schwarzen Schichtverbundes genügt.

In einer vierten Ausführungsform sind das Kohlenstoff-haltige Schwarzpigment und das mindestens eine plättchenförmige Effektpigment in jeweils zwei voneinander getrennten Schichten der Beschichtung enthalten, die vorzugsweise auf dem Substrat direkt aufeinander angeordnet sind. Dabei ist es möglich, aber nicht erforderlich, dass das Substrat, auf dem die Beschichtung aufgebracht wird, selbst ein Kohlenstoff-haltiges Schwarzpigment enthält. Auf dem Substrat ist als Beschichtung zunächst eine ein Kohlenstoff-haltiges Schwarzpigment enthaltende Schicht aufgebracht, die keine der genannten plättchenförmigen Effektpigmente enthält und im CIELAB-L*;a*,b*-Farbraum einen L* 15-Wert von <10 erzeugt, wenn das damit beschichtete Substrat wie oben beschrieben vermessen wird. Vorzugsweise direkt auf eine solche schwarze Basislackschicht wird eine Farblackschicht aufgebracht, die mindestens eines (eine Sorte) der vorab beschriebenen plättchenförmigen Effektpigmente enthält. In dieser Ausführungsform enthält die Farblackschicht kein Kohlenstoff-haltiges Schwarzpigment. Mehrere voneinander verschiedene Arten der genannten plättchenförmigen Effektpigmente können in der Farblackschicht eingesetzt werden, was teilweise auch vorteilhaft ist, wie weiter unten beschrieben ist. Optional können auch hier weitere Schichten und vorteilhafterweise eine finale Klarlackschicht als Teil der Beschichtung aufgebracht werden, solange der L* 15-Wert des Gesamtschichtverbundes im Bereich von 1 bis 60 liegt und der Schichtverbund als Ganzes damit dem Erfordernis eines dunklen oder schwarzen Schichtverbundes genügt.

In jeder der genannten Ausführungsformen können in der Schicht, die die plättchenförmigen Effektpigmente enthält, auch mindestens zwei voneinander verschiedene plättchenförmige Effektpigmente der genannten Art enthalten sein. Gemäß der vorliegenden Erfindung handelt es sich um voneinander verschiedene plättchenförmige Effektpigmente, wenn diese sich im Material des Trägers (Al₂O₃ oder SiO₂), in der mittleren geometrischen Dicke des Trägers, im Material der eisenhaltigen Schicht (Fe₃O₄-haltig oder FeTiOshaltig) oder in ihrer Partikelgröße unterscheiden. Es können auch zwei oder mehrere der Unterscheidungsmerkmale gleichzeitig vorliegen.

Es hat sich beispielsweise als vorteilhaft herausgestellt, wenn zwei voneinander verschiedene plättchenförmige Effektpigmente, die jeweils auf einem Al₂O₃-Träger eine Schicht aus Fe₃O₄, aber eine unterschiedliche mittlere geometrische Dicke des Trägers sowie unterschiedliche Partikelgrößen aufweisen, gemeinsam in der Schicht auf dem Substrat eingesetzt werden, die die plättchenförmigen Effektpigmente enthält. Die unterschiedlichen mittleren geometrischen Dicken der Träger sollen in diesem Fall zu jeweils einem der oben genannten Bereiche gehören, mit denen das Reflexionsmaximum im Wellenlängenbereich von 900 ± 50 nm oder 1550 ± 20 nm gezielt beeinflusst werden kann.

Wie oben bereits dargelegt, eignen sich plättchenförmige, Al₂O₃-haltige Träger mit mittleren geometrischen Dicken der Trägerpartikel im Bereich von 120 bis 150 nm dazu, mit den resultierenden plättchenförmigen Effektpigmenten die Infrarotreflexion sowohl in den Wellenlängenbereichen 900 ± 50 nm als auch 1550 ± 20 nm zu erhöhen, wobei der Fokus auf dem Wellenlängenbereich 900 ± 50 nm liegt, während mit mittleren geometrischen Dicken der Trägerpartikel im Bereich von 200 bis 350 nm eine hohe Infrarotreflexion im Wellenlängenbereich von 1550 ± 20 nm und mit mittleren geometrischen Dicken im Bereich von 350 bis 400 nm das Maximum der Infrarotreflexion in den Wellenlängenbereich 900 ± 50 nm erhalten werden kann.

Werden nun beispielsweise zwei verschiedene Arten an plättchenförmigen Effektpigmenten eingesetzt, deren Al₂O₃-Trägerpartikel mittlere geometrische Dicken einerseits im Bereich von 120 bis 150 nm und andererseits im Bereich von 200 bis 350 nm bei jeweils enger Schichtdickenvarianz der Trägerpartikel aufweisen, kann über den relativen prozentualen Gewichtsanteil des jeweiligen plättchenförmigen Effektpigmentes am Gesamtgewicht der beiden plättchenförmigen Effektpigmente in der diese enthaltenden Schicht gezielt das gewünschte Reflexionsmaximum von entweder 900 ± 50 nm oder 1550 ± 20 nm eingestellt werden.

Auf diese Weise oder auch durch Einsatz von anderen, voneinander verschiedenen plättchenförmigen Effektpigmenten der genannten Art können mit einer konkreten Beschichtung auf einem Substrat gemäß der vorliegenden Erfindung gezielt Reflexionsmaxima im Wellenlängenbereich 900 ± 50 nm oder im Wellenlängenbereich 1550 ± 20 nm eingestellt werden, sodass die entsprechend resultierenden Schichtverbunde bedarfsgerecht an das jeweilige Detektionssystem angepasst werden können.

Ebenso von Vorteil ist es, wenn plättchenförmige Effektpigmente, die auf einem Al₂O₃- oder SiO₂-Träger eine FeTiOs-Schicht aufweisen, innerhalb einer Schicht der Beschichtung mit einem Kohlenstoff-haltigen Schwarzpigment und/oder mit einem plättchenförmigen Effektpigment, welches auf einem Al₂O₃- oder SiO₂-Träger eine Fe₃O₄-Schicht aufweist, gemeinsam eingesetzt werden, weil damit der L*15 -Wert des resultierenden Schichtverbundes über die Beschichtung gut im angestrebten Bereich eingestellt werden kann.

Gegenstand der vorliegenden Erfindung ist auch ein dunkler oder schwarzer Schichtverbund, bestehend aus einer Beschichtung auf einem Substrat, welcher eine erhöhte Infrarot-Reflexion aufweist, wobei die Beschichtung zusätzlich oder alternativ zu einem Kohlenstoff-haltigen Schwarzpigment mindestens ein plättchenförmiges Effektpigment enthält, welches auf einem plättchenförmigen Al₂O₃- oder SiO₂-Träger mindestens eine Fe₃O₄-haltige Schicht oder eine FeTiOs-haltige Schicht aufweist, wobei der dunkle oder schwarze Schichtverbund einen L*15 -Wert im Bereich von 1 bis 60 aufweist und wobei die Infrarot-Reflexion des Schichtverbundes mindestens im Wellenlängenbereich 850 bis 1570 nm höher ist als die Infrarot-Reflexion eines Vergleichs-Schichtverbundes, der das Kohlenstoff-haltige Schwarzpigment enthält, einen L* 15 -Wert im genannten Bereich aufweist und das mindestens eine plättchenförmige Effektpigment nicht enthält.

Als dunkel oder schwarz wird ein Schichtverbund bestehend aus einem Substrat und einer Beschichtung gemäß der vorliegenden Erfindung angesehen, wenn er, von der Beschichtungsseite aus gemessen, einen L*15 - Wert im Bereich von 1 bis 60, vorzugsweise im Bereich von 5 bis 50, aufweist. Wie bereits oben dargelegt, bezieht sich der L* 15-Wert auf den Helligkeitswert unter einem Beobachtungswinkel, der eine Entfernung in Richtung der Lichtquelle von 15 Grad vom Glanzwinkel einer mit einem Gonio-Spektralphotometer unter einem Beleuchtungswinkel von 45° vermessenen Probe aufweist.

Der L* 15-Wert im CIELAB-System stellt einen Wert für die Helligkeit der Probe nahe am Glanzwinkel dar und weist damit generell den höchsten Helligkeitswert auf, den diese Probe, abhängig vom Beobachtungswinkel, aufweisen kann. Im beanspruchten Bereich ist der visuelle Farbeindruck der Proben dunkel beziehungsweise schwarz.

Die Vermessung der Proben kann mit jedem handelsüblichen Gonio-Spektralphotometer durchgeführt werden. Für die vorliegende Erfindung basieren die Messergebnisse auf Messungen mit einem Gonio-Spektralphotometer vom Typ BYK-mac i (Firma BYK Gardner GmbH, DE) im SMC 5-Modus über dem schwarz vorbeschichteten Flächenteil des Testblechs, wie oben bereits beschrieben.

Die Infrarot-Reflexion des erfindungsgemäßen dunklen oder schwarzen Schichtverbundes ist mindestens im Wellenlängenbereich von 850 bis 1570 nm höher als die Infrarot-Reflexion eines Vergleichs-Schichtverbundes, der ein Kohlenstoff-haltiges Schwarzpigment enthält, die plättchenförmigen Effektpigmente aber nicht enthält und ansonsten einen vergleichbaren Aufbau und eine vergleichbare Zusammensetzung aufweist, und außerdem einen L*15-Wert im Bereich von 1 bis 60 aufweist. Optional kann die Infrarot-Reflexion des erfindungsgemäßen Schichtverbundes jedoch auch für Wellenlängenbereiche des Infrarotlichtes außerhalb der genannten Grenzwerte erhöht sein, was insbesondere für Bauteile in Fahrzeuginnenräumen von Bedeutung sein kann, die in einem solchen Falle gegenüber handelsüblichen dunklen oder schwarzen Vergleichsbauteilen eine geringere Aufheizung des entsprechenden Fahrzeuginnenraums zur Folge hätte.

Vorzugsweise ist die Infrarot-Reflexion eines erfindungsgemäßen Schichtverbundes mindestens im Wellenlängenbereich 900 ± 50 nm oder im Bereich 1550 ± 20 nm höher als die Infrarot-Reflexion des entsprechenden Vergleichs-Schichtverbundes. Die Infrarot-Reflexion eines erfindungsgemäßen Schichtverbundes kann jedoch ebenso sowohl im Wellenlängenbereich 900 ± 50 nm als auch im Wellenlängenbereich 1550 ± 20 nm höher sein als die Infrarot-Reflexion des entsprechenden Vergleichs-Schichtverbundes.

Wie vorab bereits ausgeführt, kann durch geeignete Auswahl der bestimmten plättchenförmigen Effektpigmente, insbesondere durch geeignete Wahl der geometrischen Dicken der Trägerpartikel sowie durch den Einsatz von verschiedenen Arten der bestimmten plättchenförmigen Effektpigmente in geeigneten Mischungsverhältnissen in der gewählten Beschichtung gezielt das Reflexionsmaximum des jeweiligen resultierenden Schichtverbundes vorbestimmt werden. Es versteht sich von selbst, dass beim gemeinsamen Einsatz verschiedener plättchenförmiger Effektpigmente, die tendenziell zu verschiedenen Reflexionsmaxima führen, der größere relative Gewichtsanteil des jeweiligen plättchenförmigen Effektpigmentes die Lage des Reflexionsmaximums des resultierenden Schichtverbundes bestimmt. Dabei können die relativen Gewichtsverhältnisse in jedem denkbaren Verhältnis eingestellt werden.

Der Einsatz von voneinander verschiedenen plättchenförmigen Effektpigmenten in der Beschichtung des erfindungsgemäßen dunklen oder schwarzen Schichtverbundes kann daher von besonderem Vorteil sein. Es handelt sich dabei um eine der bevorzugten Ausführungsformen der Erfindung.

Für den erfindungsgemäßen dunklen oder schwarzen Schichtverbund sind grundsätzlich vier voneinander verschiedene Ausführungsformen einsetzbar, die oben bereits näher beschrieben wurden. Auf eine Wiederholung wird daher hier verzichtet.

Die Schicht der Beschichtung auf dem Substrat, welche die plättchenförmigen Effektpigmente enthält, enthält diese mit einem Gewichtsanteil im Bereich von 1 bis 60 Gew.-%, vorzugsweise 5 bis 35 Gew.-%, bezogen auf das Gewicht dieser (trockenen) Schicht, und zwar unabhängig davon, ob in dieser Schicht ein Kohlenstoff-haltiges Schwarzpigment enthalten ist oder nicht..

Der erfindungsgemäße dunkle oder schwarze Schichtverbund, bestehend aus einer Beschichtung auf einem Substrat, lässt sich vorteilhaft überall dort einsetzen, wo dunkle oder schwarze Beschichtungen auf beliebigen Substraten eine gegenüber handelsüblichen Vergleichsbeschichtungen erhöhte Reflexion in Infrarotbereich, insbesondere im NIR-Wellenlängenbereich, aufweisen sollen. Diese erhöhte IR-Reflexion macht entsprechende Schichtverbunde aus Substrat und Beschichtung, die mit der erfindungsgemäß zusammengesetzten Beschichtung versehen sind, geeignet zur Erkennung mittels üblicher Laserdetektionssysteme wie beispielsweise dem bekannten Lidar-Verfahren. Auch Wärmeenergie der Solarstrahlung kann über die erhöhte Infrarot-Reflexion in verminderter Form absorbiert werden. Damit ist der erfindungsgemäße Schichtverbund besonders für den Einsatz als inneres und äußeres Fahrzeugteil aller Art, aber auch als Verkehrsleiteinrichtung oder Teil davon, geeignet. Es kann sich hierbei um beliebige Fahrzeugarten handeln.

Besonderen Einsatz finden die erfindungsgemäßen Schichtverbunde jedoch als äußere Karosserieteile und/oder andere äußere Bauteilen eines Fahrzeuges, wobei das Fahrzeug über ein Fahrassistenz-System verfügt oder autonom gesteuert wird. Hier ermöglicht der erfindungsgemäße Schichtverbund das gegenseitige Erkennen dieser Art von Fahrzeugen mittels lasergesteuerter Detektionssysteme.

Die Erfindung soll nachfolgend anhand von Beispielen näher erläutert, jedoch nicht auf diese beschränkt werden.

### Beispiele:

Verschiedene Proben von Beschichtungen werden wie folgt hergestellt:
Schwarz und weiß beschichtete Testbleche der Firma Leneta (Leneta T12G Metopac, Kohlenstoff-haltiges Schwarzpigment in der schwarzen Beschichtung enthalten) werden jeweils mit einer Beschichtungszusammensetzung vollflächig beschichtet, die neben einem handelsüblichen Bindemittel und einem Lösemittel (Varnish WBC000 der Firma MIPA SE, Deutschland) eine Pigmentmassekonzentration PMK von 18% in der Trockenmasse an plättchenförmigen Effektpigmenten gemäß der Erfindung enthält. Die Beschichtung erfolgt mittels eines pneumatischen Sprühverfahrens mit einer Trockenschichtdicke im Bereich von 12 bis 15 µm. Nach der thermischen Aushärtung dieser Farbschicht wird ein farbloser Klarlack (MIPA CC4, Firma MIPA SE) auf die Farbschicht aufgebracht (Trockenschichtdicke ca. 50 µm). Die so erhaltenen Proben werden mit einem Gonio-Spektralphotometer vom Typ BYK-mac i (Firma BYK Gardner GmbH, DE) über dem schwarz vorbeschichteten Flächenteil des Testblechs im SMC 5-Modus vermessen. Zu Vergleichszwecken werden Proben nach dem gleichen Verfahren, aber mit anderer Pigmentmassekonzentration, hergestellt).

### Beispiel 1:

Vergleich der L15*-Werte und IR-Reflexionswerte im Wellenlängenbereich 900 ± 50 nm und im Wellenlängenbereich von 1550 ± 20 nm von Proben, die lediglich ein Kohlenstoff-haltiges Schwarzpigment, und Proben, die lediglich ein plättchenförmiges Effektpigment enthalten. Die Ergebnisse sind in Tabelle 1 dargestellt.

**Tabelle 1:**

| **PMK (%)** | **Pigment** | **L*15-Wert** | **Reflexion 900 ± 50 nm (%)** | **Reflexion 1550 ± 20 nm (%)** |
|---|---|---|---|---|
| 3,5 | Emperor^{®} 2000 | 1,1 | 5,4 | 5,8 |
| 3,5 | Spezial Black^{®} 6 | 2,3 | 5,3 | 5,7 |
| 3,5 | Spezial Black^{®} 100 | 5,3 | 4,9 | 5.9 |
| 18,0 | Träger Al₂O₃, ca. 220 nm, Fe₃O₄ | 45,0 | 9,5 | 18,8 |
| 18,0 | Träger Al₂O₃, ca. 150 nm, Fe₃O₄ | 46,2 | 21,6 | 12,1 |

Die Ergebnisse zeigen, dass Schichtverbunde, die Beschichtungen mit handelsüblichem Farbruß aufweisen, stabil niedrige L*15 -Werte erzielen können, die prozentuale Reflexion von Licht der Wellenlängenbereiche 900 ± 50 nm und 1550 ± 20 nm jedoch sehr schwach ist. Der alleinige Einsatz von erfindungsgemäß verwendeten plättchenförmigen Effektpigmenten (angegeben ist die mittlere geometrische Dicke der Träger und die Art der eisenhaltigen Schicht) gewährleistet dagegen immer noch Helligkeitswerte L* 15, die das Erfordernis "dunkel oder schwarz" erfüllen, führt aber zu deutlich verbesserten Reflexionswerten in den definierten Wellenlängenbereichen.

### Beispiel 2:

Es wird der Einfluss der erfindungsgemäß verwendeten plättchenförmigen Effektpigmente auf den Helligkeitswert L*15 und das Reflexionsverhalten des entsprechenden Schichtverbundes in den definierten Wellenlängenbereichen untersucht, wenn Kohlenstoff-haltiges Schwarzpigment und plättchenförmiges Effektpigment in einer einzigen Schicht der Beschichtung gemeinsam vorliegen. Die Ergebnisse sind in Tabelle 2 dargestellt.

**Tabelle 2:**

| **PMK (%)** | **Pigment** | **L*15-Wert** | **Reflexion 900 ± 50 nm (%)** | **Reflexion 1550 ± 20 nm (%)** |
|---|---|---|---|---|
| 3,5 | Emperor^{®} 2000 | 26.5 | 7,2 | 12,6 |
| 18,0 | Träger Al₂O₃, ca. 220 nm, Fe₃O₄ | | | |
| 3,5 | Emperor^{®} 2000 | 7,7 | 5.8 | 6,9 |
| 1,8 | Träger Al₂O₃, ca. 220 nm, Fe₃O₄ | | | |
| 3,5 | Emperor^{®} 2000 | 25,9 | 9,6 | 10,5 |
| 9,0 | Träger Al₂O₃, ca. 220 nm, Fe₃O₄ | | | |
| 9,0 | Träger Al₂O₃, ca. 150 nm, Fe₃O₄ | | | |
| 1,75 | Emperor^{®} 2000 | 19,6 | 8,2 | 9,1 |
| 4,5 | Träger Al₂O₃, ca. 220 nm, Fe₃O₄ | | | |
| 4,5 | | | | |
| | Träger Al₂O₃, ca. 150 nm, Fe₃O₄ | | | |

Die Messergebnisse zeigen, dass mit steigendem Gewichtsanteil des oder der plättchenförmigen Effektpigmente in der Beschichtung die Helligkeit L*15 zunimmt, sich aber im geforderten Wertebereich befindet um dem Erfordernis "dunkel der schwarz" zu genügen. Die IR-Reflexionswerte in den angestrebten Wellenlängenbereichen lassen sich gegenüber einem Schichtverbund mit einer Beschichtung, die lediglich Farbruß enthält, dagegen zum Teil erheblich steigern.

### Beispiel 3:

Es wird untersucht, wie sich das Verhältnis verschiedener plättchenförmiger Effektpigmente auf die Messergebnisse auswirkt, wenn in einer Schicht der Beschichtung lediglich zwei voneinander verschiedene plättchenförmige Effektpigmente, aber kein Kohlenstoff-haltiges Schwarzpigment, enthalten sind. Die Ergebnisse sind in Tabelle 3 dargestellt.

**Tabelle 3:**

| **PMK (%)** | **Pigment** | **L*15-Wert** | **Reflexion 900 ± 50 nm (%)** | **Reflexion 1550 ± 20 nm (%)** |
|---|---|---|---|---|
| 13,5 | Träger Al₂O₃, ca. 220 nm, Fe₃O₄ | 46,2 | 13,2 | 17,0 |
| 4,5 | Träger Al₂O₃, ca. 150 nm, Fe₃O₄ | | | |
| 9,0 | Träger Al₂O₃, ca. 220 nm, Fe₃O₄ | **46,3** | **16,4** | **15,1** |
| 9,0 | Träger Al₂O₃, ca. 150 nm, Fe₃O₄ | | | |
| 4,5 | Träger Al₂O₃, ca. 220 nm, Fe₃O₄ | 45,8 | 19,1 | 13,5 |
| 13,5 | Träger Al₂O₃, ca. 150 nm, Fe₃O₄ | | | |

Die Ergebnisse zeigen, dass ein erfindungsgemäß eingesetztes plättchenförmiges Effektpigment mit einer mittleren geometrischen Dicke des Trägerpartikels im Bereich von 120 bis 150 nm mit steigendem relativen Gewichtsanteil das Reflexionsmaximum des Schichtverbundes in den Wellenlängenbereich 900 ± 50 nm verschiebt.

Insgesamt ist erkennbar, dass die besten Ergebnisse gemäß der Aufgabenstellung der vorliegenden Erfindung erzielt werden, wenn äquivalente Gewichtsteile von mindestens zwei verschiedenen plättchenförmigen Effektpigmenten, gegebenenfalls kombiniert mit einem geringen Anteil an Kohlenstoff-haltigem Schwarzpigment, in einer einzigen Schicht der Beschichtung des Schichtverbundes eingesetzt werden. Unter diesen Bedingungen ist bei guten L*15 -Werten ein hohe bis sehr hohe Steigerung der Infrarotreflexion im angestrebten Wellenlängenbereich gegenüber eines Vergleichs-Schichtverbundes erhältlich.

## Patentansprüche

1. Verwendung von plättchenförmigen Effektpigmenten zur Erhöhung der Infrarot-Reflexion eines dunklen oder schwarzen Schichtverbundes bestehend aus einem Substrat und einer Beschichtung auf dem Substrat, wobei die Beschichtung zusätzlich oder alternativ zu einem Kohlenstoff-haltigen Schwarzpigment mindestens ein plättchenförmiges Effektpigment enthält, welches auf einem plättchenförmigen Al₂O₃- oder SiO₂-Träger mindestens eine Fe₃O₄-haltige Schicht oder eine FeTiOs-haltige Schicht aufweist, wobei der Schichtverbund einen L* 15 -Wert im Bereich von 1 bis 60 aufweist, und wobei die Infrarot-Reflexion des Schichtverbundes mindestens im Wellenlängen-Bereich von 850 nm bis 1570 nm erhöht ist, verglichen mit einem dunklen oder schwarzen Schichtverbund aus einem Substrat und einer Beschichtung, wobei der Schichtverbund das Kohlenstoff-haltige Schwarzpigment enthält, einen L*15 -Wert im genannten Bereich aufweist und das mindestens eine plättchenförmige Effektpigment nicht enthält.

2. Verwendung gemäß Anspruch 1, **dadurch gekennzeichnet, dass** der dunkle oder schwarze Schichtverbund kein Kohlenstoff-haltiges Schwarzpigment enthält.

3. Verwendung gemäß Anspruch 1, **dadurch gekennzeichnet, dass** das Kohlenstoff-haltige Schwarzpigment im Substrat enthalten ist und dass die Beschichtung das Kohlenstoff-haltige Schwarzpigment nicht enthält.

4. Verwendung gemäß Anspruch 1, **dadurch gekennzeichnet, dass** das Kohlenstoff-haltige Schwarzpigment und das mindestens eine plättchenförmige Effektpigment gemeinsam in einer Schicht der Beschichtung enthalten sind.

5. Verwendung gemäß Anspruch 1, **dadurch gekennzeichnet, dass** das Kohlenstoff-haltige Schwarzpigment und das mindestens eine plättchenförmige Effektpigment in jeweils zwei voneinander getrennten Schichten der Beschichtung enthalten sind.

6. Verwendung gemäß einem oder mehreren der Ansprüche 1 bis 5, **dadurch gekennzeichnet, dass** mindestens zwei voneinander verschiedene plättchenförmige Effektpigmente in der Beschichtung enthalten sind, die voneinander verschiedene plättchenförmige Träger aufweisen.

7. Verwendung gemäß einem oder mehreren der Ansprüche 1 bis 6, **dadurch gekennzeichnet, dass** die Infrarot-Reflexion des Schichtverbundes gezielt im Wellenlängen-Bereich 900 ± 50 nm oder im Bereich 1550 ± 20 nm erhöht wird.

8. Verwendung gemäß einem oder mehreren der Ansprüche 1 bis 7, **dadurch gekennzeichnet, dass** plättchenförmige Effektpigmente eingesetzt werden, die einen plättchenförmigen Al₂O₃-Träger aufweisen.

9. Verwendung gemäß einem oder mehreren der Ansprüche 1 bis 8, **dadurch gekennzeichnet, dass** es sich bei dem Substrat um eine Folie, eine Platte oder ein Formteil jeweils aus Kunststoff, Metall oder einem Kompositwerkstoff handelt, wobei das Substrat optional vorbehandelt oder vorbeschichtet sein kann und das Substrat und/oder eine Vorbeschichtung das Kohlenstoff-haltige Schwarzpigment optional enthält.

10. Dunkler oder schwarzer Schichtverbund mit erhöhter Infrarot-Reflexion, bestehend aus einem Substrat und einer Beschichtung auf dem Substrat, **dadurch gekennzeichnet, dass** die Beschichtung zusätzlich oder alternativ zu einem Kohlenstoff-haltigen Schwarzpigment mindestens ein plättchenförmiges Effektpigment enthält, welches auf einem plättchenförmigen Al₂O₃- oder SiO₂-Träger mindestens eine Fe₃O₄-haltige Schicht oder eine FeTiO₃-haltige Schicht aufweist, wobei der dunkle oder schwarze Schichtverbund einen L*15 -Wert im Bereich von 1 bis 60 aufweist und wobei die Infrarot-Reflexion des Schichtverbundes mindestens im Wellenlängenbereich 850 bis 1570 nm höher ist als die Infrarot-Reflexion eines Vergleichs-Schichtverbundes, der das Kohlenstoff-haltige Schwarzpigment enthält, einen L* 15 -Wert im genannten Bereich aufweist und das mindestens eine plättchenförmige Effektpigment nicht enthält.

11. Dunkler oder schwarzer Schichtverbund gemäß Anspruch 10, **dadurch gekennzeichnet, dass** die Infrarot-Reflexion mindestens im Wellenlängenbereich 900 ± 50 nm oder im Wellenlängenbereich 1550 ± 20 nm höher ist als die Infrarot-Reflexion der Vergleichsbeschichtung.

12. Dunkler oder schwarzer Schichtverbund gemäß Anspruch 10 oder 11, **dadurch gekennzeichnet, dass** mindestens zwei voneinander verschiedene plättchenförmige Effektpigmente in der Beschichtung enthalten sind, die voneinander verschiedene plättchenförmige Träger aufweisen.

13. Dunkler oder schwarzer Schichtverbund gemäß einem oder mehreren der Ansprüche 10 bis 12, **dadurch gekennzeichnet, dass** die Beschichtung kein Kohlenstoff-haltiges Schwarzpigment enthält.

14. Dunkler oder schwarzer Schichtverbund gemäß einem oder mehreren der Ansprüche 10 bis 13, **dadurch gekennzeichnet, dass** die Beschichtung das Kohlenstoff-haltige Schwarzpigment und das mindestens eine plättchenförmige Effektpigment in einer einzigen Schicht enthält, die optional Teil eines Mehrschichtsystems ist.

15. Dunkler oder schwarzer Schichtverbund gemäß einem oder mehreren der Ansprüche 10 bis 14, **dadurch gekennzeichnet, dass** die Beschichtung das Kohlenstoff-haltige Schwarzpigment und das mindestens eine plättchenförmige Effektpigment in jeweils voneinander getrennten Schichten eines Mehrschichtsystems enthält.

16. Dunkler oder schwarzer Schichtverbund gemäß einem oder mehreren der Ansprüche 10 bis 15, **dadurch gekennzeichnet, dass** das mindestens eine plättchenförmige Effektpigment mit einem Anteil von 1 bis 60 Gew.- %, bezogen auf das Gewicht der Schicht, in der Schicht der Beschichtung enthalten ist, welche das mindestens eine plättchenförmige Effektpigment enthält.

17. Dunkler oder schwarzer Schichtverbund gemäß einem oder mehreren der Ansprüche 10 bis 16, **dadurch gekennzeichnet, dass** es sich um ein Fahrzeugteil oder um eine Verkehrsleiteinrichtung handelt.

18. Dunkler oder schwarzer Schichtverbund gemäß Anspruch 17, **dadurch gekennzeichnet, dass** es sich bei dem Fahrzeugteil um ein äußeres Karosserieteil oder Bauteil eines Fahrzeuges handelt und das Fahrzeug über ein Fahrassistenz-System verfügt oder autonom gesteuert wird.

## Claims

1. Use of flake-form effect pigments for increasing the infrared reflection of a dark or black layer composite consisting of a substrate and a coating on the substrate, where the coating, in addition or as an alternative to a carbon-containing black pigment, comprises at least one flake-form effect pigment which has at least one Fe₃O₄-containing layer or FeTiOs-containing layer on a flake-form Al₂O₃ or SiO₂ support, where the layer composite has an L* 15 value in the range from 1 to 60, and where the infrared reflection of the layer composite is increased, at least in the wavelength range from 850 nm to 1570 nm, compared with a dark or black layer composite comprising a substrate and a coating where the layer composite comprises the carbon-containing black pigment, has an L*15 value in the said range and does not comprise the at least one flake-form effect pigment.

2. Use according to Claim 1, **characterised in that** the dark or black layer composite does not comprise a carbon-containing black pigment.

3. Use according to Claim 1, **characterised in that** the carbon-containing black pigment is present in the substrate and **in that** the coating does not comprise the carbon-containing black pigment.

4. Use according to Claim 1, **characterised in that** the carbon-containing black pigment and the at least one flake-form effect pigment are present together in a layer of the coating.

5. Use according to Claim 1, **characterised in that** the carbon-containing black pigment and the at least one flake-form effect pigment are present in each of two layers of the coating which are separated from one another.

6. Use according to one or more of Claims 1 to 5, **characterised in that** at least two flake-form effect pigments which are different from one another and have flake-form supports which are different from one another are present in the coating.

7. Use according to one or more of Claims 1 to 6, **characterised in that** the infrared reflection of the layer composite is increased specifically in the wavelength range 900 ± 50 nm or in the range 1550 ± 20 nm.

8. Use according to one or more of Claims 1 to 7, **characterised in that** flake-form effect pigments which have a flake-form Al₂O₃ support are employed.

9. Use according to one or more of Claims 1 to 8, **characterised in that** the substrate is a film, a plate or a moulding, in each case made from plastic, metal or a composite material, where the substrate may optionally have been pre-treated or pre-coated and the substrate and/or a pre-coating optionally comprises the carbon-containing black pigment.

10. Dark or black layer composite having increased infrared reflection, consisting of a substrate and a coating on the substrate, **characterised in that** the coating, in addition or as an alternative to a carbon-containing black pigment, comprises at least one flake-form effect pigment which has at least one Fe₃O₄-containing layer or FeTiOs-containing layer on a flake-form Al₂O₃ or SiO₂ support, where the dark or black layer composite has an L*15 value in the range from 1 to 60 and where the infrared reflection of the layer composite is higher, at least in the wavelength range from 850 nm to 1570 nm, than the infrared reflection of a comparative layer composite which comprises the carbon-containing black pigment, has an L* 15 value in the said range and does not comprise the at least one flake-form effect pigment.

11. Dark or black layer composite according to Claim 10, **characterised in that** the infrared reflection, at least in the wavelength range 900 ± 50 nm or in the wavelength range 1550 ± 20 nm, is higher than the infrared reflection of the comparative coating.

12. Dark or black layer composite according to Claim 10 or 11, **characterised in that** at least two flake-form effect pigments which are different from one another and which have flake-form supports which are different from one another are present in the coating.

13. Dark or black layer composite according to one or more of Claims 10 to 12, **characterised in that** the coating does not comprise a carbon-containing black pigment.

14. Dark or black layer composite according to one or more of Claims 10 to 13, **characterised in that** the coating comprises the carbon-containing black pigment and the at least one flake-form effect pigment in a single layer, which is optionally part of a multilayer system.

15. Dark or black layer composite according to one or more of Claims 10 to 14, **characterised in that** the coating comprises the carbon-containing black pigment and the at least one flake-form effect pigment in each of layers of a multilayer system which are separated from one another.

16. Dark or black layer composite according to one or more of Claims 10 to 15, **characterised in that** the at least one flake-form effect pigment is present in a proportion of 1 to 60% by weight, based on the weight of the layer, in the layer of the coating that comprises the at least one flake-form effect pigment.

17. Dark or black layer composite according to one or more of Claims 10 to 16, **characterised in that** it is a motor vehicle part or a traffic control device.

18. Dark or black layer composite according to Claim 17, **characterised in that** the motor vehicle part is an external bodywork part or component of a motor vehicle, and the motor vehicle has a driving assistance system or is autonomously controlled.

## Revendications

1. Utilisation de pigments à effet en forme de paillettes afin d'augmenter la réflexion infrarouge d'un composite de couche sombre ou noir constitué d'un substrat et d'un revêtement sur le substrat, où le revêtement, de manière additionnelle ou alternative à un pigment noir contenant du carbone, comprend au moins un pigment à effet en forme de paillettes qui possède au moins une couche contenant du Fe₃O₄ ou une couche contenant du FeTiO₃ sur un support d'Al₂O₃ ou de SiO₂ en forme de paillettes, où le composite de couche présente une valeur L* 15 dans la plage allant de 1 à 60, et où la réflexion infrarouge du composite de couche est augmentée, au moins dans la plage de longueurs d'onde allant de 850 nm à 1570 nm, par rapport à un composite de couche sombre ou noir comprenant un substrat et un revêtement où le composite de couche comprend le pigment noir contenant du carbone, présente une valeur L* 15 dans ladite plage et ne comprend pas le au moins un pigment à effet en forme de paillettes.

2. Utilisation selon la revendication 1, **caractérisée en ce que** le composite de couche sombre ou noir ne comprend pas de pigment noir contenant du carbone.

3. Utilisation selon la revendication 1, **caractérisée en ce que** le pigment noir contenant du carbone est présent dans le substrat et **en ce que** le revêtement ne comprend pas le pigment noir contenant du carbone.

4. Utilisation selon la revendication 1, **caractérisée en ce que** le pigment noir contenant du carbone et le au moins un pigment à effet en forme de paillettes sont présents ensemble dans une couche du revêtement.

5. Utilisation selon la revendication 1, **caractérisée en ce que** le pigment noir contenant du carbone et le au moins un pigment à effet en forme de paillettes sont présents dans chacune des deux couches du revêtement qui sont séparées l'une de l'autre.

6. Utilisation selon l'une ou plusieurs parmi les revendications 1 à 5, **caractérisée en ce qu'**au moins deux pigments à effet en forme de paillettes qui sont différents les uns des autres et ayant des supports en forme de paillettes qui sont différents les uns des autres sont présents dans le revêtement.

7. Utilisation selon l'une ou plusieurs parmi les revendications 1 à 6, **caractérisée en ce que** la réflexion infrarouge du composite de couche est augmentée spécifiquement dans la plage de longueurs d'onde de 900 ± 50 nm ou dans la plage de 1550 ± 20 nm.

8. Utilisation selon l'une ou plusieurs parmi les revendications 1 à 7, **caractérisée en ce que** l'on emploie des pigments à effet en forme de paillettes qui possèdent un support d'Al₂O₃ en forme de paillettes.

9. Utilisation selon l'une ou plusieurs parmi les revendications 1 à 8, **caractérisée en ce que** le substrat est un film, une plaque ou un moulage, dans chaque cas fait en plastique, en métal ou en un matériau composite, où le substrat peut éventuellement avoir été prétraité ou pré-revêtu et le substrat et/ou un pré-revêtement comprend éventuellement le pigment noir contenant du carbone.

10. Composite de couche sombre ou noir présentant une réflexion infrarouge accrue, constitué d'un substrat et d'un revêtement sur le substrat, **caractérisé en ce que** le revêtement, de manière additionnelle ou alternative à un pigment noir contenant du carbone, comprend au moins un pigment à effet en forme de paillettes qui possède au moins une couche contenant du Fe₃O₄ ou une couche contenant du FeTiO₃ sur un support d'Al₂O₃ ou de SiO₂ en forme de paillettes, où le composite de couche sombre ou noir présente une valeur L* 15 dans la plage allant de 1 à 60, et où la réflexion infrarouge du composite de couche est supérieure, au moins dans la plage de longueurs d'onde allant de 850 nm à 1570 nm, à la réflexion infrarouge d'un composite de couche comparatif qui comprend le pigment noir contenant du carbone, présente une valeur L* 15 dans ladite plage et ne comprend pas le au moins un pigment à effet en forme de paillettes.

11. Composite de couche sombre ou noir selon la revendication 10, **caractérisé en ce que** la réflexion infrarouge, au moins dans la plage de longueurs d'onde de 900 ± 50 nm ou dans la plage de longueurs d'onde de 1550 ± 20 nm, est supérieure à la réflexion infrarouge du revêtement comparatif.

12. Composite de couche sombre ou noir selon la revendication 10 ou 11, **caractérisé en ce qu'**au moins deux pigments à effet en forme de paillettes qui sont différents les uns des autres et ayant des supports en forme de paillettes qui sont différents les uns des autres sont présents dans le revêtement.

13. Composite de couche sombre ou noir selon l'une ou plusieurs parmi les revendications 10 à 12, **caractérisé en ce que** le revêtement ne comprend pas de pigment noir contenant du carbone.

14. Composite de couche sombre ou noir selon l'une ou plusieurs parmi les revendications 10 à 13, **caractérisé en ce que** le revêtement comprend le pigment noir contenant du carbone et le au moins un pigment à effet en forme de paillettes dans une couche unique, qui fait éventuellement partie d'un système multicouches.

15. Composite de couche sombre ou noir selon l'une ou plusieurs parmi les revendications 10 à 14, **caractérisé en ce que** le revêtement comprend le pigment noir contenant du carbone et le au moins un pigment à effet en forme de paillettes dans chacune des couches d'un système multicouches qui sont séparées les unes des autres.

16. Composite de couche sombre ou noir selon l'une ou plusieurs parmi les revendications 10 à 15, **caractérisé en ce que** le au moins un pigment à effet en forme de paillettes est présent selon une proportion allant de 1 à 60% en poids, sur la base du poids de la couche, dans la couche du revêtement qui comprend le au moins un pigment à effet en forme de paillettes.

17. Composite de couche sombre ou noir selon l'une ou plusieurs parmi les revendications 10 à 16, **caractérisé en ce qu'**il s'agit d'une pièce de véhicule automobile ou d'un dispositif de contrôle de la circulation.

18. Composite de couche sombre ou noir selon la revendication 17, **caractérisé en ce que** la pièce de véhicule automobile est une pièce de carrosserie externe ou un composant d'un véhicule automobile, et le véhicule automobile est doté d'un système d'aide à la conduite ou est contrôlé de manière autonome.
